# EUROPEAN PATENT APPLICATION

(11) **EP 1 643 362 A2**
(43) Date of publication of application: **05.04.2006**
(21) Application number: 05021130.9
(22) Date of filing: 28.09.2005
(51) Int. Cl.: G06F 9/45, G06F 9/44

(54) **System and method for optimizing mainframe applications**

(30) Priority: 01.10.2004 US 615014 P
(71) Applicant: ELECTRONIC DATA SYSTEMS CORPORATION, Plano, TX 75024 (US)
(72) Inventor: Stay, Wolfgang W., 65329 Hohenstein (DE); Becker, Frank, 65428 Rüsselsheim (DE)
(74) Representative: Grubert, Andreas

(57) **Abstract**

A computer-implemented method for optimizing an application having associated source code includes storing a catalog of one or more statements having an adverse affect on application performance. The method also includes compiling the source code associated with the application into one or more compiled listings. Furthermore, the method includes scanning the compiled listings for one or more of the retrieved statements located in the compiled listings and identifying the statements in the compiled listings that match one or more of the retrieved statements during the scanning.

## Description

### TECHNICAL FIELD

The present invention relates generally to software optimization and, more particularly, to a system and method for optimizing mainframe applications.

### BACKGROUND OF THE INVENTION

A large number companies throughout the world continue to use large "mainframe" computers running mainframe applications based on the programming languages designed for these environments, such as COBOL, PL/I and Assembler. These mainframe applications typically handle high volumes of data and/or high transaction rates within complex systems and user environments. Therefore, these applications are usually critical to the business in which the mainframe is installed.

Both execution time and cost are factors that must be considered when running mainframe applications or any other applications. For example, execution time may be critical with respect to the performance of batch systems and with respect to particular response times required by certain applications (such as web-based or other on-line systems). Unfortunately, increasing data volumes due to higher business complexity can cause batch process to exceed desired time limits and can increase the response times of critical web-based applications to unacceptable levels. Furthermore, mainframe systems are often associated with high operating costs since many businesses pay for mainframes on a usage basis (for example, license costs are often coupled to the number of MIPS in a mainframe installation) and also may pay fixed license costs for mainframe software. Given the increasing pressure to reduce IT spending, these costs have become a major problem to many businesses using mainframe computers.

Given the increasing execution time requirements and cost pressures, businesses are forced to evaluate their current mainframe installations. One option available to such businesses is to upgrade the computer hardware. However, this creates additional fixed costs and is typically only a good choice if money is not a primary decision-driving factor or if the company needs to react immediately. Another option is to optimize and tune the system environment and the applications running in the environment.

### SUMMARY OF THE INVENTION

The present invention provides a system and method for optimizing mainframe applications that substantially eliminates or reduces at least some of the disadvantages and problems associated with previous systems and methods.

In accordance with a particular embodiment of the present invention, a computer-implemented method for optimizing an application having associated source code includes storing a catalog of one or more statements having an adverse affect on application performance. The method also includes compiling the source code associated with the application into one or more compiled listings. Furthermore, the method includes scanning the compiled listings for one or more of the retrieved statements located in the compiled listings and identifying the statements in the compiled listings that match one or more of the retrieved statements during the scanning.

Technical advantages of particular embodiments of the present invention include a system and method for optimizing mainframe applications that reduces the execution and response times and the operational costs associated with these applications. For example, applications optimized using particular embodiments may benefit from one or more of the following: reduced execution time, reduced CPU utilization, increased system stability due to reduced number of resource contentions (i.e., deadlocks), and increased end-user satisfaction due to higher system availability and better response times. Particular embodiments provide these time and cost reductions due to an automated process that identifies problematic statements in application code. Such optimization at the code level provides the advantage of identifying problematic statements and other code that may seem innocuous, but that use an inordinate amount of processing resources. Furthermore, particular embodiments may include a reporting function that reports the identity and location in the source code of the problematic statements. Certain embodiments may also automatically modify one or more of the problematic statements or replace one or more of the problematic statements with statements that provide the same or similar function, but that use fewer processing resources.

Other technical advantages will be readily apparent to one skilled in the art from the following figures, descriptions and claims. Moreover, while specific advantages have been enumerated above, various embodiments may include all, some or none of the enumerated advantages.

### BRIEF DESCRIPTION OF THE DRAWINGS

For a more complete understanding of particular embodiments of the invention and their advantages, reference is now made to the following descriptions, taken in conjunction with the accompanying drawings, in which:
FIGURE 1 is a block diagram of an example mainframe application performance optimization system (MAPOS) in accordance with one embodiment of the present invention; and
FIGURE 2 is a flowchart illustrating the steps an example method for optimizing the performance of applications according to one embodiment of the present invention.

### DETAILED DESCRIPTION

Various tools exist that may be used to analyze certain aspects of applications running on mainframe and other computers. Once such tool is Strobe, which is produced by Compuware. This tool can be used to analyze software programs actively running on a mainframe and to produce reports evaluating various aspects that influence the runtime behavior of the programs. For example, one type of report that may be generated is the relative CPU usage of each statement in a program. However, such a report often presents a large amount of data to a user and does not specifically identify one or more statements that may be especially problematic with respect to CPU usage.

Such a report may identify many harmless looking statements (for example, a "MOVE SPACES TO AREA" statement) that may use significant CPU resources. Therefore, the analysis needs to go deeper than the reports generated by tools such as Strobe to identify the effects of various statements on CPU usage. For example, explanations for high CPU usage of certain statements may be determined by analyzing compiled listings (such as COBOL-Compile lists or other appropriate compiled listings) associated with the software being optimized. Once a sound understanding is obtained of how the compiler breaks down certain statements into Assembler code, the negative effects of certain statements in CPU usage may be corrected by removing the problematic statements and potentially replacing these statements with statements that have the same or similar function, but that have lower associated CPU usage. Particular embodiments of the present invention provide an automated process for identifying problematic statements in this manner, identifying the location of the specific problematic statements in the software code, and providing remedies to correct the issues caused by the problematic statements.

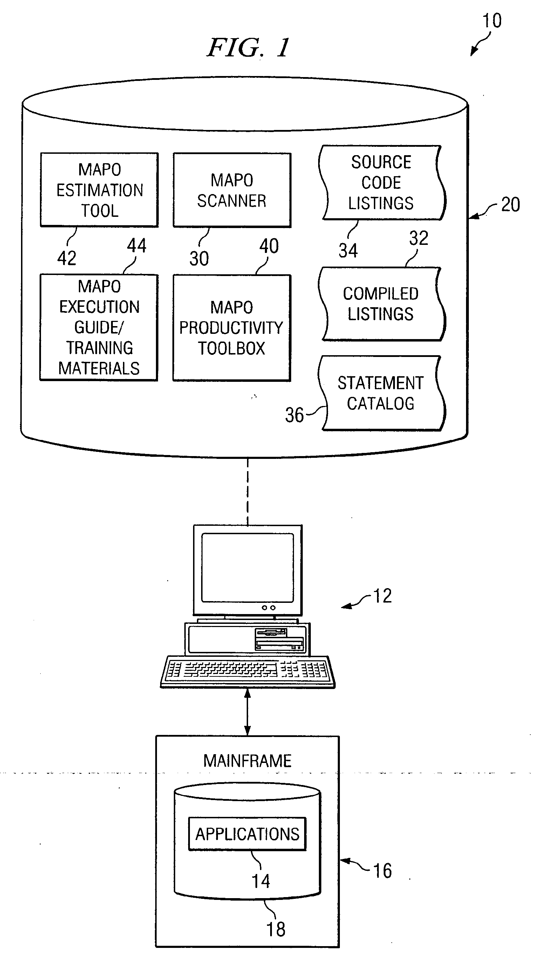

FIGURE 1 is a block diagram of an example mainframe application performance optimization system (MAPOS) 10 in accordance with one embodiment of the present invention. MAPOS 10 includes one or more computers 12 executing a variety of tools used for optimizing one or more mainframe applications 14 (or programs associated with these applications) executing on a mainframe computer 16 or any other suitable computing device and stored in data storage 18 associated with the mainframe computer 16. Computer 12 also includes a data storage 20 that stores the various tools and other resources used for optimizing applications 14, as described below. Data storage 18 and 20 may take the form of volatile or non-volatile memory including, without limitation, magnetic media, optical media, random access memory (RAM), read-only memory (ROM), removable media, or any other suitable local or memory component.

Computer 12 and mainframe 16 may each include an appropriate combination of hardware and software associated with one or more computer systems at one or more locations. These components of MAPOS 10 may share data storage, communications, or other resources according to particular needs. Each computer system may include one or more suitable input devices, output devices, mass storage media, processors, memory, or other components for receiving, processing, storing, and communicating information according to the operation of system 10. Computer 12 and mainframe 16 may be communicatively coupled in any appropriate manner. In particular embodiments, one or more of the tools or other resources shown as being stored in data storage 20 of computer 12 may be stored in association with mainframe 16 (for example, in data storage 18). In some of these embodiments, computer 12 may access mainframe 16 to retrieve particular resources in association with the optimization of applications 14 running on mainframe 16. In other embodiments, computer 16 may not be coupled to mainframe 12 and all the source code and other application-specific information to be analyzed may be stored in data storage 20. In yet other embodiments, computer 12 may be entirely eliminated and the contents of data storage 20 may be stored and executed in association with mainframe 16.

As mentioned above, data storage 20 associated with computer 12 may include a number of tools and other resources used to optimize applications 14. These tools and resources serve to define the detailed steps of a repeatable procedure for application optimization within a set of documented guidelines and to encapsulate the repeatable components of the standardized process into mechanized solutions (tools) that reduce the manual efforts involved in the application optimization process (to make the process cheaper and more effective).

Included among these tools is a mainframe application performance optimization (MAPO) scanner 30. Scanner 30 takes advantage of the fact that many types of problematic statements are commonly used throughout mainframe applications, such as applications 14. Furthermore, most of these problematic statements can be detected by use of a automated scanner. Therefore, database 20 further includes statement catalog 36 ― a catalog, library, or other collection of statements or other portions of application code that have been determined to be problematic (at least when used in certain ways). Statement catalog 36 may also specify the way that one or more of the statements is detrimental to performance and provide possible solutions to correct, replace or delete the problematic statements. As examples only, statements related to the following types of code functions may be included in statement catalog 36: definition and usage of numeric fields, processing of working storage tables, moving and comparing variable length strings or strings longer than a certain length, moves where the data source and target overlap, processing of working storage tables, complex loop end conditions, usage of link items larger than a specified size, frequently-executed dynamic sub-program calls, compiler options, language environment options, and usage of language library routines.

Scanner 30 accesses statement catalog 36 to retrieve one or more statements and scans the code associated with applications 14 to identify instances of these statements in the code. In particular embodiments, scanner 30 scans compiled listings 32 (for example, assembler code) of the application code to identify known problematic statements, although it may also scan the source code. In certain embodiments used to optimize applications written in COBOL or PL/I code, the compiled listings may be generated using a LIST compiler option instead of an OFFSET compiler option to cause an assembler listing of the application program to be written into the compiled listing. Data storage 20 may include source code listings 34 for the applications 14 or programs included as a part of applications 14 to be optimized. Computer 12 may include a compiler to create compiled listings 32 from source code listings 34, or compiled listings 32 may be communicated to computer 12 from another source.

After scanning a compiled listing, scanner 30 can identify one or more potentially problematic statements included in the compiled listing. However, although a statement found in a listing may be included in statement catalog 36, it may not use excessive CPU resources in all cases (in particular implementations of code). Therefore, scanner 30 may also include functionality or be able to access other resources to test the performance of one or more of the problematic statements identified by scanner 30 in the compiled listings or other code. For example, scanner 30 (and/or an associated tool, such as the Strobe software described above) may cause each identified problematic statement to be executed (on mainframe 16 or another appropriate computer) a large number of times (for example, over a million times) and may monitor the execution to determine CPU usage or other performance parameters. If certain identified statements as executed in a particular implementation of code do not create performance issues, then they may be removed from any reports of problematic statements to a user and/or may not be considered in attempts to optimize the code, as described below. In other embodiments, this performance testing step may be skipped and all statements identified in the scan may be considered problematic.

After completing a scan of particular compiled listings (or source code), scanner 30 may generate one or more reports that may identify the potentially problematic statements identified by scanner and that may include recommended program code changes. Scanner 30 may access source code listings 34 and identify the problematic statements to the user in the source code (instead of or in addition to in the compiled listings). The report may also include suggested modifications to the code to improve the performance of the code. Furthermore, in particular embodiments, scanner 30 can automatically implement one or more of the suggested modifications by deleting problematic statements, modifying problematic statements, replacing problematic statements with alternative statements, or any other appropriate actions.

In particular embodiments, a MAPO productivity toolbox 40 may also be included among the tools and resources stored in data storage 20. Toolbox 40 may be used to improve the productivity of users of MAPOS 10 by providing a complete on-line working environment that is specifically tailored for the MAPO process. Toolbox 40 may also enable user access to compiled listings 32 and/or source code listings 34 of the applications to be analyzed, it may offer compile functions to create compiled listings 34 from source code 34, it may invoke the scanner 30, it may provide the reports generated by scanner 30 within a user friendly interface, and it may enable a user to jump directly into the program source code at the places at which potentially problematic statements exist to speed any necessary modifications.

In particular embodiments, a MAPO estimation tool 42 may also be included among the tools and resources stored in data storage 20. Such a tool may be used to quickly measure potential costs and effort involved with using MAPOS 10 (for example, to estimate internal costs and to quickly deliver a price to potential customers requesting optimization services). As an example, MAPO estimation tool 42 may comprise a spreadsheet in which the cost drivers (for example, number of applications to be analyzed, complexity of the code, computer language used to program that code) can be entered and a price can be automatically calculated based on various costs pre-assigned to each cost-driver. Data storage 20 also may include, in particular embodiments, a MAPO execution guide and/or training materials that describe in detail the repeatable steps to be performed in a MAPOS project, from provision of source code to delivery of the optimized source code. Such an execution guide and/or training materials 44 can take advantage of the automated nature of MAPOS 10 to instruct users how to systematically and automatically optimize applications.

MAPOS 10 provides a much more in-depth and automated optimization process than previous systems and methods. For example, previous techniques have concentrated on the application environment (for example, buffers, region sizes, and run-time parameters) and/or the data access portions of application programs (for example, DB2 accesses and bad SQL statements) rather than doing an in-depth code check on each source code line or a search on the assembler resolution of each statement in a compiled listing of the source code. The effort and cost that might be associated with performing such an in-depth analysis manually is offset by the automation in MAPOS 10 provided by scanner 30 and the other tools included in MAPOS 10.

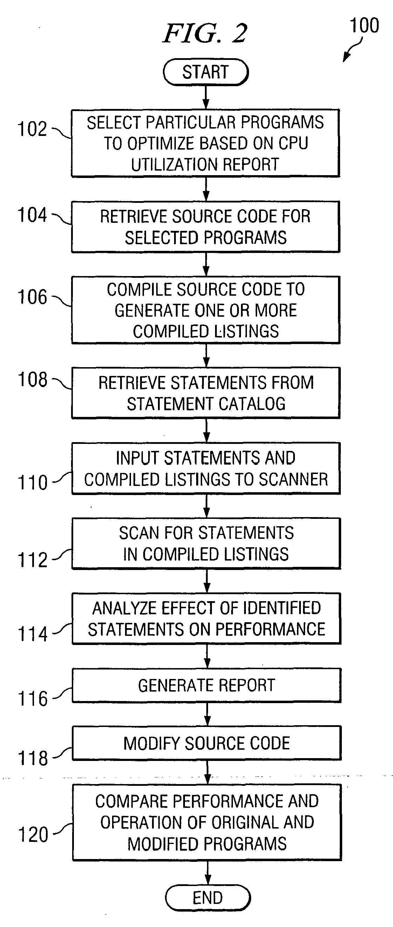

FIGURE 2 is a flowchart illustrating the steps of an example method 100 for optimizing the performance of applications according to one embodiment of the present invention. Method 100 begins at step 102 where one or more software programs associated with one or more applications are selected to be optimized based on the CPU utilization or other performance of the programs. As an example only, a summarized CPU usage report could be used to identify particular applications on a mainframe that need to be optimized. Once these programs are identified, particular jobs or on-line transactions associated with the identified applications that need optimization may be selected using a more detailed CPU usage report. If batch jobs are identified for optimization, then the user may also identify steps and main programs to be tuned using an associated job outlist. Furthermore, continuing with the example, the identified on-line transactions and/or jobs may be monitored while in production using a performance monitor (such as Compuware Strobe). The particular programs to be optimized may then be specifically selected by evaluating the output of the performance monitor. Any other appropriate techniques for identifying applications, or particular program code associated with an application, for optimization using MAPOS 10 or other systems may be used.

The source code for the selected programs to be optimized is retrieved at step 104, and the source code is compiled into one or more compiled listings at step 106. At step 108, MAPOS 10 or another appropriate system retrieves particular (or all) statements from a statement catalog for use in optimizing the programs. At step 110, the statements and the compiled listings are input to a scanner associated with MAPOS 10 or another appropriate system, and the scanner scans for the statements in the compiled listings at step 112. This scanning may be done in a batch mode. As a result of the scan, the scanner identifies one or more of the statements identified in the compiled listings during the scan.

The effect of one or more of the identified statements on the performance of the program may be evaluated at step 114. For example, as described above, the scanner (and/or an associated tool, such as the Strobe software described above) may cause each identified statement to be executed a large number of times and may monitor the execution to determine CPU usage or other performance parameters. If certain identified statements as executed in a particular implementation of code do not create performance issues, then they may be removed from the list of identified statements. In particular embodiments, step 114 may be skipped.

After completing a scan of the compiled listings, the scanner or another appropriate component may generate at step 116 one or more reports that identify the potentially problematic statements identified by scanner. These reports may also include recommended program code changes. For example, such a report may identify the location of problematic statements to the user in the source code. At step 118, the code for programs including problematic statements may be modified. This modification may be performed manually or automatically. For example, the code may be modified by deleting problematic statements, modifying problematic statements, replacing problematic statements with alternative statements, or any other appropriate actions.

At step 120, the performance of each modified program is monitored to determine whether the modified program has the same functionality of the original program and whether performance has improved. In particular embodiments, this step may be performed by running both the original and modified programs in parallel in a production-like test environment and monitoring both programs. If the modified program has the same functionality or otherwise has sufficient functionality for the intended purpose and if the performance (for example, CPU usage) has improved (for example, met a performance goal), then the method may end. If not, MAPOS 10 or another appropriate system may be reapplied to the program in an attempt to achieve better performance and/or functionality.

It should be understood that some of the steps illustrated in FIGURE 2 may be combined, modified or deleted where appropriate, and additional steps may also be added. Additionally, steps may be performed in any suitable order without departing from the scope of the invention. Furthermore, although the present invention has been described in detail with reference to particular embodiments, it should be understood that various other changes, substitutions, and alterations may be made hereto without departing from the spirit and scope of the present invention. For example, although the present invention has been described with reference to a number of elements included within MAPOS 10, these elements may be combined, rearranged or positioned in order to accommodate particular needs. The present invention contemplates great flexibility in the arrangement of these elements as well as their internal components.

Numerous other changes, substitutions, variations, alterations and modifications may be ascertained by those skilled in the art and it is intended that the present invention encompass all such changes, substitutions, variations, alterations and modifications as falling within the spirit and scope of the appended claims.

## Claims

1. A computer-implemented method for optimizing an application, the application having associated source code, comprising:
storing a catalog of one or more statements having an adverse affect on application performance;
compiling the source code associated with the application into one or more compiled listings;
retrieving one or more of the statements from the catalog;
scanning the compiled listings for one or more of the retrieved statements located in the compiled listings; and
identifying the statements in the compiled listings that match one or more of the retrieved statements during the scanning.

2. The method of Claim 1, further comprising generating a report comprising the statements identified in the compiled listings.

3. The method of Claim 2, wherein the report further comprises one or more suggested modifications or replacements for one or more of the identified statements.

4. The method of Claim 2, further comprising analyzing the effect of the identified statements on the performance of the application before generating the report, such that identified statements that do not create application performance issues are not included in the report.

5. The method of Claim 1, further comprising automatically modifying one or more portions of the source code associated with one or more of the statements identified in the compiled listings.

6. The method of Claim 5, wherein automatically modifying one or more portions of the source code comprising automatically modifying portions of one or more of the identified statements.

7. The method of Claim 5, wherein automatically modifying one or more portions of the source code comprising automatically replacing one or more of the identified statements with one or more substitute statements.

8. The method of Claim 5, further comprising analyzing the effect of the identified statements on the performance of the application before automatically modifying one or more portions of the source code, such that identified statements that do not create application performance issues are not modified.

9. A system for optimizing an application, the application having associated source code, the system comprising:
a database storing a catalog of one or more statements having an adverse affect on application performance;
a complier operable to compile the source code associated with the application into one or more compiled listings; and
a scanner operable to:
retrieve one or more of the statements from the catalog;
scan the compiled listings for one or more of the retrieved statements located in the compiled listings; and
identify the statements in the compiled listings that match one or more of the retrieved statements during the scanning.

10. The system of Claim 9, wherein the scanner is further operable to generate a report comprising the statements identified in the compiled listings.

11. The system of Claim 10, wherein the report further comprises one or more suggested modifications or replacements for one or more of the identified statements.

12. The system of Claim 10, wherein the scanner is further operable to analyze the effect of the identified statements on the performance of the application before generating the report, such that identified statements that do not create application performance issues are not included in the report.

13. The system of Claim 9, wherein the scanner is further operable to automatically modify one or more portions of the source code associated with one or more of the statements identified in the compiled listings.

14. The system of Claim 13, wherein the scanner is further operable to analyze the effect of the identified statements on the performance of the application before automatically modifying one or more portions of the source code, such that identified statements that do not create application performance issues are not modified.
